(19) **Europäisches Patentamt European Patent Office Office européen des brevets**

(11) **EP 1 746 017 A1**

(12) **DEMANDE DE BREVET EUROPEEN**

(43) Date de publication:
**24.01.2007 Bulletin 2007/04**

(51) Int Cl.:
*B62D 57/04* (2006.01)  *F03B 17/04* (2006.01)

(21) Numéro de dépôt: **05015565.4**

(22) Date de dépôt: **19.07.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(71) Demandeur: **Andrieu, Paul**
**91550 Paray Vielle Poste (FR)**

(72) Inventeur: **Andrieu, Paul**
**91550 Paray Vielle Poste (FR)**

Remarques:
Revendications modifiées conformément à la règle 86 (2) CBE.

(54) **Dispositif de propulsion et de poussée, utilisant la force de la pression atmosphérique**

(57) Ce dispositif est constitué par un ventilateur centrifuge comportant des aubes recourbées créant une dépression atmosphérique longitudinale s'exerçant jusque sur la face d'une extrémité hermétique.

Entraîné par un moteur approprié, le dispositif peut faire évoluer un mobile sans roues motrices, sans embrayage, sans boîte à vitesses ou sans hélice.

FIG - 2

MOTEUR

1)) Sens de rotation.
2)) Extrémité hermétique ou s'exerce la poussée.
3)) Sens de déplacement.

EP 1 746 017 A1

## Description

Chacun sait que la pression atmosphérique s'exerce sur tous les corps.

Au niveau de la mer la pression atmosphérique est de l'ordre de 1 kilogramme par centimètre carré.

Par exemple sur un objet cylindrique cette pression s'exerce sur les deux extrémités suivant la formule:

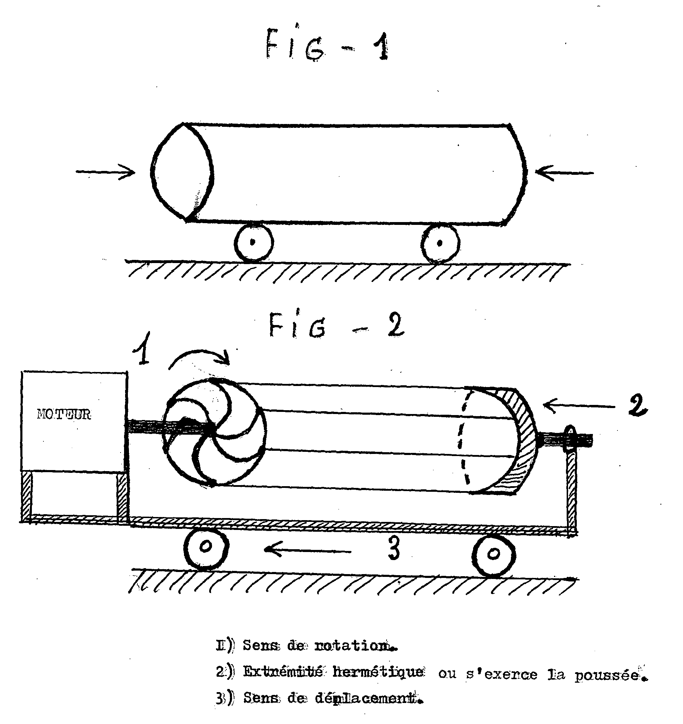

$$\text{pression} = \frac{\pi D^2}{4} \quad \text{Fig.1.}$$

C'est ainsi que sur un cylindre de 20 centimètres de diamètre la pression est égale à

$$\frac{3,14 \times 20 \times 20}{4} = 314$$

kilogrammes. Fig.1

Il est clair que si l'on parvient à réduire ou supprimer la pression atmosphérique à une extrémité, le cylindre se déplacera !

L'objet de la présente invention concerne un dispositif permettant très précisément de réduire ou de supprimer la pression atmosphérique sur la face d'une extrémité hermétique. Fig.2

Selon une première caractéristique le dispositif comporte un ventilateur cylindrique à aubes recourbées, destiné à évacuer l'air latéralement et non vers l'arrière.

Lors de la rotation du ventilateur une dépression longitudinale interne est ainsi créée. Fig.2

    1) Sens de rotation du ventilateur
    2) Extrémité hermétique

Lors de la rotation du ventilateur, la dépression longitudinale interne est toujours inférieure à la pression atmosphérique, ce qui est à l'origine de la poussée.

Cette dépression est fonction de la dimension et de la vitesse de rotation du ventilateur à aubes recourbées, lequel est entraîné par un moteur approprié. Fig.2.

L'expérience montre que lorsque l'ensemble est correctement réalisé, le dispositif peut faire évoluer un mobile, sans roues motrices, sans embrayage, sans boîte à vitesses ou sans hélice.

Il va de soi que les aubes du ventilateur sont protégées par une solide armature métallique grillagée, ici non représentée.

## Revendications

**1.** Dispositif de propulsion utilisant la force de la pression atmosphérique, **caractérisé en ce qu'**il comporte un ventilateur cylindrique à aubes recourbées mis en oeuvre par un moteur approprié. Fig.2

**2.** Dispositif selon la revendication 1, **caractérisé en ce que** le ventilateur à aubes fait évacuer l'air latéralement et non vers l'arrière. Fig.2.

**3.** Dispositif selon la revendication 1, **caractérisé en ce que** la rotation du ventilateur provoque une dépression longitudinale interne, sur la face de l'extrémité hermétique, ce qui permet de faire évoluer le mobile sans roues motrices, sans embrayage, sans boîte à vitesses ou sans hélice.

**4.** Dispositif selon l'une quelconque des revendications, **caractérisé en ce que** lors de la rotation du ventilateur, la dépression longitudinale interne est toujours inférieure à la pression atmosphérique extérieure, ce qui est à l'origine de la poussée.

**5.** Dispositif selon l'une quelconque des revendications, **caractérisé en ce que** le ventilateur à aubes est protégé par une armature métallique grillagée.

**Revendications modifiées conformément à la règle 86(2) CBE.**

**1.** Dispositif de propulsion destiné à faire avancer un véhicule sans roues motrices **caractérisé en ce qu'**il comporte un ventilateur cylindrique actionné par un moteur approprié de faible puissance.

**2.** Dispositif selon la revendication 1, **caractérisé en ce que** le ventilateur cylindrique comporte des aubes recourbées destinées à évacuer l'air latéralement.

**3.** Dispositif selon la revendication 2, **caractérisé en ce que** les aubes du ventilateur cylindrique sont encastrées dans une extrémité hermétique.

**4.** Dispositif selon l'une quelconque des revendications précédentes, **caractérisé en ce que** la rotation du ventilateur cylindrique supprime la pression atmosphérique sur une face de la paroi hermétique.

**5.** Dispositif selon la revendication 4, **caractérisé en ce que** la différence de pression atmosphérique sur chacune des faces de la paroi hermétique détermine la propulsion et la poussée.

# FIG - 1

# FIG - 2

MOTEUR

1

2

3

1) Sens de rotation.

2) Extrémité hermétique ou s'exerce la poussée.

3) Sens de déplacement.

**Office européen des brevets**

**RAPPORT DE RECHERCHE EUROPEENNE**

Numéro de la demande

EP 05 01 5565

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 193 168 A (RAFAEL ARMAMENT DEVELOPMENT AUTHORITY LTD) 3 avril 2002 (2002-04-03) * le document en entier * ----- | 1,3-5 | B62D57/04 F03B17/04 |
| X | US 2 021 784 A (HOCHSTADT JACK) 19 novembre 1935 (1935-11-19) * le document en entier * ----- | 1,3-5 | |
| X | DE 602 297 C (RICHARD PFAUTZ) 6 septembre 1934 (1934-09-06) * le document en entier * ----- | 1 | |
| X | GB 305 641 A (FRANZ KUBA; ERNST SCHNEIDER; RUDOLF ZWERINA) 9 janvier 1930 (1930-01-09) * le document en entier * ----- | 1 | |
| X | FR 914 828 A (J. BAYON) 18 octobre 1946 (1946-10-18) * le document en entier * ----- | 1 | DOMAINES TECHNIQUES RECHERCHES (IPC) |
| A | NL 242 815 A (N.J. GERHARZ) 27 janvier 1964 (1964-01-27) * le document en entier * ----- | 1 | B62D F03B F03G |
| A | DE 31 49 452 A1 (ROHLFING,MICHAEL) 5 juin 1985 (1985-06-05) * le document en entier * ----- | 1 | |

Le présent rapport a été établi pour toutes les revendications

| Lieu de la recherche | Date d'achèvement de la recherche | Examinateur |
|---|---|---|
| Munich | 19 décembre 2005 | Giorgini, G |

**ANNEXE AU RAPPORT DE RECHERCHE EUROPEENNE**
**RELATIF A LA DEMANDE DE BREVET EUROPEEN NO.**

EP 05 01 5565

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-12-2005

| Document brevet cité au rapport de recherche | | | Date de publication | Membre(s) de la famille de brevet(s) | | Date de publication |
|---|---|---|---|---|---|---|
| EP 1193168 | A | | 03-04-2002 | IL | 138695 A | 31-08-2004 |
| | | | | JP | 2002200990 A | 16-07-2002 |
| | | | | US | 2002060267 A1 | 23-05-2002 |
| US 2021784 | A | | 19-11-1935 | AUCUN | | |
| DE 602297 | C | | 06-09-1934 | AUCUN | | |
| GB 305641 | A | | 09-01-1930 | AUCUN | | |
| FR 914828 | A | | 18-10-1946 | AUCUN | | |
| NL 242815 | A | | | AUCUN | | |
| DE 3149452 | A1 | | 05-06-1985 | AUCUN | | |

EPO FORM P0460

Pour tout renseignement concernant cette annexe : voir Journal Officiel de l'Office européen des brevets, No.12/82